(19)

Europäisches Patentamt
European Patent Office
Office européen des brevets

(11) **EP 4 317 118 A1**

(12) **EUROPEAN PATENT APPLICATION**

(43) Date of publication:
**07.02.2024 Bulletin 2024/06**

(21) Application number: **22188756.5**

(22) Date of filing: **04.08.2022**

(51) International Patent Classification (IPC):
**C05B 1/00** *(2006.01)*  **C05B 7/00** *(2006.01)*
**C05B 9/00** *(2006.01)*  **C05G 3/40** *(2020.01)*
**C05G 5/12** *(2020.01)*  **C05G 5/14** *(2020.01)*

(52) Cooperative Patent Classification (CPC):
(C-Sets available)
**C05G 5/12; C05B 1/00; C05G 3/40; C05G 5/14**

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.
4612 PX Bergen op Zoom (NL)**

(72) Inventors:
• **MAMEDOV, Aghaddin**
  **Sugar Land, TX 77478 (US)**
• **AL-RABHI, Mohamed**
  **Sugar Land, TX 77478 (US)**

(74) Representative: **J A Kemp LLP
80 Turnmill Street
London EC1M 5QU (GB)**

(54) **FERTILIZER COMPRISING IMMEDIATE- AND SLOW-RELEASE AGENTS IN SOIL COMPLEX NUTRIENTS**

(57)    Disclosed is a fertilizer containing a mixture containing one or more of potassium phosphate, calcium sulfate, magnesium ammonium phosphate, and calcium ammonium phosphate. Methods of making and using the fertilizer granule are also disclosed.

FIG. 1

**(Cont. next page)**

(52) Cooperative Patent Classification (CPC): (Cont.)

C-Sets
**C05B 1/00, C05B 7/00, C05B 9/00, C05D 3/02;**
**C05B 1/00, C05B 7/00, C05D 3/02**

**Description**

**BACKGROUND OF THE INVENTION**

**I. Field of the Disclosure**

This disclosure generally concerns fertilizer compositions containing an immediate-release agent and a slow-release agent. In particular embodiments, the disclosure concerns fertilizers containing calcium ammonium phosphate and/or magnesium ammonium phosphate, and calcium sulfate and/or potassium phosphate.

**II. Background**

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Application of a fertilizer does not always provide the full amount of the nutrients in the fertilizer to the plant within a short period of time. Some fertilizers contain nutrient containing compounds that are not readily available to the plant upon application. In these circumstances, some apply fertilizer well before the planting of plants, or some over fertilize closer to the planting of the plants to provide sufficient nutrients to the plant initially. However, this comes at the cost of time, may require multiple treatments to the soil before or after planting, and/or increases expenses.

In addition to immediate release fertilizers, plants, such as crop plants, need nutrients at least over the entire growth and maturation period for the plant. However, many fertilizers when applied to a soil disperse, are degraded, or are taken up within a short period of time after application. To address this issue, fertilizers can be applied multiple times to the same plants or slow release fertilizers can be used. Some approaches to slow release fertilizers include polymer coating a fertilizer core. Though, many polymer coatings are expensive and/or will undesirably build up in the soil over time after repeated applications. Some approaches to slow release fertilizers include coating or mixing with insoluble metal oxides, such as MgO and CaO. However, these metal oxides do not provide much if any nutrients to the plant.

**SUMMARY OF THE INVENTION**

A solution to at least some of the problems discussed above is disclosed herein, including generating a fertilizer product without urea and generating a fertilizer product that has both immediate-release and slow-release characteristics for its nutrients. Certain aspects are related to the development of fertilizers that provide an initial amount of one or more nutrients, and then provide at least one controlled, slow-release component of the nutrients. In some aspects, the component(s) build up in soil as a reservoir of nutrients for release over a time. In one aspect, the solution resides in providing a fertilizer comprising calcium (Ca) and/or magnesium (Mg), potassium (K), nitrogen (N) present as ammonium, sulfur (S) present as sulfate, and phosphorus (P) present as phosphate. In some aspects, the fertilizer contains at least one metal ammonium phosphate compound for slow release of nutrients and a metal phosphoric salt and/or a metal sulfuric salt for quick release of nutrients. The metal ammonium phosphate compound may act as a binder for the other components in the fertilizer, such as the metal phosphoric salt and/or metal sulfuric salt. In some embodiments, synthesis of at least part of the fertilizer occurs through reacting a metal oxide and/or metal carbonate, such as calcium oxide (CaO), magnesium oxide (MgO), magnesium carbonate ($MgCO_3$), calcium carbonate ($CaCO_3$), and/or dolamite, with potassium hydroxide (KOH) and phosphoric acid ($H_3PO_4$). Non-limiting example reactions can include the following:

$$CaO + 3\ KOH + 2\ H_3PO_4 \rightarrow CaHPO_4 + K_3PO_4 + 4\ H_2O$$

$$MgO + 3\ KOH + 2\ H_3PO_4 \rightarrow MgHPO_4 + K_3PO_4 + 4\ H_2O$$

In some embodiments, synthesis of at least part of the fertilizer occurs through reacting a metal hydrogen phosphoric compound, such as $CaHPO_4$ and/or $MgHPO_4$, and an ammonia source, such as ammonium hydroxide ($NH_4OH$) and/or ammonia, to produce a metal ammonium phosphate, such as $CaNH_4PO_4$ and/or $MgNH_4PO_4$. Non-limiting example reactions can include the following:

$$CaHPO_4 + NH_4OH \rightarrow CaNH_4PO_4$$

$$MgHPO_4 + NH_4OH \rightarrow MgNH_4PO_4$$

In some embodiments, synthesis of at least part of the fertilizer occurs through reacting potassium hydroxide ($KOH$) with phosphoric acid ($H_3PO_4$) to produce potassium phosphate ($K_3PO_4$). A non-limiting example of this reactions can include the following:

$$KOH + H_3PO_4 \rightarrow K_3PO_4 + 3H_2O$$

In some embodiments, synthesis of at least part of the fertilizer occurs through mixing $CaNH_4PO_4$ and/or $MgNH_4PO_4$ with calcium sulfate ($CaSO_4$), $MgSO_4$, and/or $K_3PO_4$ to produce a fertilizer composition. The $CaSO_4$ in some instances can be waste $CaSO_4$, such as phosphogypsum (PG) or red gypsum (RG).

The final product may contain a mixture of the above composition chemicals, including, but not limited to any one of the complexes $CaSO_4/K_3PO_4/CaNH_4PO_4$, $CaSO_4/K_3PO_4/MgNH_4PO_4$, and $CaSO_4/K_3PO_4/CaNH_4PO_4/MgNH_4PO_4$.

In some aspects, chemical compositions and reactions to produce the chemical compositions of the fertilizer can be described by the formulas of Table 1.

**Table 1**

| Starting material | Product after reaction of starting material with the phosphoric acid | Product after reaction of step 1 material with the $NH_4OH$ | Final Product after mixing of step 2 material with the $CaSO_4$ (gypsum) |
|---|---|---|---|
| Steps | 1 | 2 | 3 |
| CaO, KOH | $CaHPO_4, K_3PO_4$ | $CaNH_4PO_4, K_3PO_4$ | $CaSO_4, K_3PO_4/CaNH_4PO_4$ |
| MgO, KOH | $MgHPO_4, K_3PO_4$ | $MgNH_4PO_4, K_3PO_4$ | $CaSO_4, K_3PO_4/MgNH_4PO_4$ |
| $CaCO_3/ MgCO_3$ (dolomite), KOH | $CaHPO_4, MgHPO_4, K_3PO_4$ | $CaNH_4PO_4 + MgNH_4PO_4, K_3PO_4$ | $CaSO_4, K_3PO_4/CaNH_4PO_4 + MgNH_4PO_4$ |

Embodiments of the disclosure are improvements to known fertilizer, including by involving the use of a slow-release agent comprising nitrogen (N) and phosphorus (P) and a metal such as calcium (Ca) or magnesium (Mg) and an immediate-release agent comprising potassium (K), Ca, and P. In some embodiments, such a mixture allows for immediate release of phosphate and also a controlled, slow-time release of phosphate. Current slow-release fertilizer products often use physical intervention to slow the release of the fertilizer, such as by coating the fertilizer with an insoluble material to slow the fertilizer's release. Current slow-release fertilizers may also employ enzymatic inhibitors, such as urease inhibitors or nitrification inhibitors, to slow the utilization of the fertilizer. Though the fertilizers described herein may also contain physical interventions and/or inhibitors, the fertilizers described herein do not always require such measures to produce a slow-release and immediate-release nutrient fertilizer composition.

Embodiments herein describe mixtures of nutrients, and the preparation of such mixtures, which play a double role-first, for immediate application in to soil, and second, for generating a buildup of fertilizer in soil as reservoir of nutrients for release over time. An immediate-release aspect of the fertilizer can comprise or consist of any soluble salts selected from group consisting of $MgSO_4$, $CaSO_4$, $K_3PO_4$, $CaCl_2$, $KCl$, $NiSO_4$, $ZnSO_4$, $FeCl_2$, $FeSO_4$, and any combination thereof. The slow-release aspect of the fertilizer can comprise or consist of one or more double salts, such as calcium ammonium phosphate and magnesium ammonium phosphate, including at any ratio. In some instances the slow-release aspect of the fertilizer can also comprise non-soluble oxides or salts, including those comprising Mg, Ca, Fe, Zn, Ni. The non-soluble salts can comprise or consist of simple salts, such as $MgCO_3$, $CaCO_3$, $FeCO_3$ or a combination of these salts.

In some aspects, the fertilizer comprises or consists of a blend of calcium ammonium phosphate and calcium sulfate, and optionally potassium phosphate. In some aspects, the fertilizer comprises or consists of a blend of magnesium ammonium phosphate and calcium sulfate, and optionally potassium phosphate. In some aspects, the fertilizer comprises or consists of a blend of calcium ammonium phosphate, magnesium ammonium phosphate, and calcium sulfate, and optionally potassium phosphate.

Compositions described herein comprising calcium sulfate may comprise waste gypsum from different processes, which allows for recycling waste gypsum into fertilizer. Waste gypsum can include several different or several combined calcium sulfate $CaSO_4$ sources (such as natural gypsum, flue-gas desulphurization products, recycled gypsum, or paper and additives coming from different gypsum products [Jiménez-RiveroJusto Garcia-Navarro, in Advances in Construction and Demolition Waste Recycling, 2020]).

Waste gypsum is an industrial solid waste, which can be divided into two major categories: phosphogypsum (PG) and red gypsum (RG). The main component of waste gypsum is $CaSO_4$ with a theoretical CaO content of 32.6 wt. % that can store roughly 0.26 kg/ton of $CO_2$. PG is generated in the production of phosphoric acid by a wet acid process. It is estimated that 4.5-5 tons of PG is generated per ton of phosphoric acid produced. The annual output of PG worldwide is estimated to be over 100 million tons. The main impurities in the PG can be free phosphoric acid, phosphates, organic matter, and fluorides.

Recycled gypsum can provide sulfur and can be used in the fertilizer compositions herein. Combination of with calcium ammonium phosphate and/or magnesium ammonium phosphate, as disclosed herein, can produce the advanced nutrient containing complex elements with immediate and slow-release characteristics.

Six tons of RG are generated in titanium oxide production plants per ton of titanium dioxide produced. The annual output of RG is estimated at over 15 million tons. The content of $CaSO_4 \cdot 2H_2O$ in the RG is 60-80 wt. % with approximately 30 wt. % $Fe_2O_3$ as the main impurity. RG can exhibit a red or yellow color. In the certain aspects where the calcium sulfate comprises red gypsum, the fertilizer made thereby may comprise the additional nutrient Fe, in the form of iron (II) phosphate.

Fertilizers encompassed in certain embodiments herein comprise ingredients that can be used to cover immediate soil P and K deficiency in the form of an easily soluble potassium phosphate, while also covering long-terms N and P needs through a slow release of $CaNH_4PO_4$ or $MgNH_4PO_4$.

Certain aspects are directed to a fertilizer comprising a homogenous mixture comprising a nitrogen source, a potassium source, and a phosphorus source. The homogenous mixture, in some aspects, comprises a binder. The binder can comprise a slow-release agent. The slow-release agent can comprise calcium ammonium phosphate ($CaNH_4PO_4$), magnesium ammonium phosphate ($MgNH_4PO_4$), or a combination of $CaNH_4PO_4$ and $MgNH_4PO_4$. The homogenous mixture, in some aspects, comprises an immediate-release agent. The immediate-release agent can comprise potassium phosphate ($K_3PO_4$), magnesium sulfate ($MgSO_4$), calcium sulfate ($CaSO_4$), nickel sulfate ($NiSO_4$), zinc sulfate ($ZnSO_4$), iron (II) sulfate ($FeSO_4$), or a combination thereof.

In some aspects, the slow-release agent further comprises magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), dolomite, or a combination thereof.

In some aspects, the immediate-release agent comprises or consists of $CaSO_4$, $MgSO_4$, and/or $K_3PO_4$. The $CaSO_4$ can be comprised in waste gypsum and/or a recycled gypsum. In some aspects, the fertilizer does not comprise a binding agent separate from the calcium ammonium phosphate ($CaNH_4PO_4$), magnesium ammonium phosphate ($MgNH_4PO_4$), or a combination of $CaNH_4PO_4$ and $MgNH_4PO_4$. The fertilizer can be a granular fertilizer. In some aspects, the fertilizer comprises iron (II) phosphate. In some aspects, the fertilizer comprises potassium hydroxide (KOH), potassium carbonate ($K_2CO_3$), and/or potassium bicarbonate ($KHCO_3$). In some aspects, the fertilizer comprises dolomite.

In certain aspects, the immediate-release agent and the slow-release agent are comprised at a weight ratio between approximately 3:1 to 1:5, such as 3:1, 2:1, 1;1, 1:2, 1:3, 1:4, or 1:5. In certain aspects, the immediate-release agent comprises $CaSO_4$ and $K_3PO_4$ at a weight ratio of approximately 3:1 to 1:3, such as 3:1, 2:1, 1;1, 1:2, or 1:3.

Certain aspects are directed to a method of making a fertilizer, including any fertilizer described herein. The method can include steps (a), (b), (c), and/or (d). In step (a), CaO, MgO, $MgCO_3$, $CaCO_3$, and/or dolomite can be contacted with phosphoric acid ($H_3PO_4$) to generate a first reaction product comprising calcium hydrogen phosphate ($CaHPO_4$) and/or magnesium hydrogen phosphate ($MgHPO_4$). In step (b), the first reaction product can be contacted with an ammonia source, such as ammonium hydroxide ($NH_4OH$) and/or ammonia ($NH_3$), to generate a second reaction product comprising $CaNH_4PO_4$ and/or $MgNH_4PO_4$. In step (c), potassium hydroxide (KOH) can be contacted with $H_3PO_4$ to generate a third reaction product comprising $K_3PO_4$. In step (d), the second reaction product, the third reaction product, and $CaSO_4$ can be combined to generate a fertilizer mixture. In certain aspects, the method of making the fertilizer comprises drying the fertilizer mixture to form a solid fertilizer composition. In certain aspects, the combining step (d) comprises combining the third reaction product with $CaSO_4$ at a weight ratio of approximately 3:1 to 1:3, such as 3:1, 2:1, 1;1, 1:2, 1:3, and/or comprises combining the third reaction product and $CaSO_4$ with the second reaction product at a weight ratio of approximately 3:1 to 1:5, such as 3:1, 2:1, 1;1, 1:2, 1:3, 1:4, or 1:5, of a combination of the third reaction product and $CaSO_4$ : second reaction product. Steps (a), (b), (c), and/or (d) may occur at approximately 55°C to 75°C, such as 55, 56, 57, 58, 59, 60, 61, 62, 63, 64, 65, 66, 67, 68, 69, 70, 71, 72, 73, 74, or 75°C. The $CaSO_4$ used in the method can comprise red gypsum and/or waste gypsum from production of $H_3PO_4$. In some aspects, the fertilizer composition comprises or consists of $CaSO_4$, $K_3PO_4$, and one or both of $CaNH_4PO_4$ and $MgNH_4PO_4$. In some aspects, the ammonia source comprises a solution of ammonium hydroxide, ammonium, ammonium carbonate, ammonia gas, succinimide, and/or phthalimide.

Also disclosed are the following Aspects 1 to 27 of the present invention.

Aspect 1 is a fertilizer composition comprising:
a slow-release agent comprising calcium ammonium phosphate ($CaNH_4PO_4$), magnesium ammonium phosphate

($MgNH_4PO_4$), or a combination of $CaNH_4PO_4$ and $MgNH_4PO_4$:

an immediate-release agent comprising calcium sulfate ($CaSO_4$), potassium phosphate ($K_3PO_4$), and/or magnesium sulfate ($MgSO_4$).

Aspect 2 is the fertilizer composition of aspect 1, wherein the composition comprises a further slow-release agent comprising magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), or a combination thereof.

Aspect 3 is the fertilizer composition of any one of aspects 1 to 2, wherein the immediate-release agent further comprises nickel sulfate ($NiSO_4$), zinc sulfate ($ZnSO_4$), iron (II) sulfate ($FeSO_4$), or a combination thereof.

Aspect 4 is the fertilizer composition of any one of aspects 1 to 3, wherein the immediate-release agent comprises $CaSO_4$.

Aspect 5 is the fertilizer composition of aspect 4, wherein the $CaSO_4$ is comprised in waste gypsum and/or a recycled gypsum.

Aspect 6 is the fertilizer composition of any one of aspects 1 to 5, wherein the fertilizer does not comprise a binding agent separate from the calcium ammonium phosphate ($CaNH_4PO_4$), magnesium ammonium phosphate ($MgNH_4PO_4$), or combination of $CaNH_4PO_4$ and $MgNH_4PO_4$.

Aspect 7 is the fertilizer composition of any one of aspects 1 to 6, wherein the fertilizer composition is a granular fertilizer.

Aspect 8 is the fertilizer composition of any one of aspects 1 to 7, further comprising iron (II) phosphate ($FePO_4$).

Aspect 9 is the fertilizer composition of any one of aspects 1 to 8, further comprising KOH, $K_2CO_3$, and/or $KHCO_3$.

Aspect 10 is the fertilizer composition of any one of aspects 1 to 9, further comprising dolomite.

Aspect 11 is the fertilizer composition of any one of aspects 1 to 10, wherein the immediate-release agent and the slow-release agent are comprised at a weight ratio between approximately 3:1 to 1:5.

Aspect 12 is the fertilizer composition of any one of aspects 1 to 11 wherein the immediate-release agent comprises $K_3PO_4$.

Aspect 13 is the fertilizer composition of any one of aspects 1 to 12, wherein composition comprises $CaSO_4$ and $K_3PO_4$ at a weight ratio of approximately 3:1 to 1:3.

Aspect 14 is the fertilizer composition of any one of aspects 1 to 13, wherein the slow-release agent comprises a combination of $CaNH_4PO_4$ and $MgNH_4PO_4$.

Aspect 15 is the fertilizer composition of any one of aspects 1 to 14, wherein the composition does not comprise $MgNH_4PO_4$.

Aspect 16 is the fertilizer composition of any one of aspects 1 to 15, wherein the composition does not comprise $CaNH_4PO_4$.

Aspect 17 is the fertilizer composition of any one of aspects 1 to 16, wherein the fertilizer composition comprises a nitrogen source, a phosphorus source, and a potassium source.

Aspect 18 is the fertilizer composition of any one of aspects 1 to 17, wherein the fertilizer is homogenous.

Aspect 19 is a method of producing a fertilizer composition, the method comprising the steps of:

(a) contacting CaO, MgO, $MgCO_3$, $CaCO_3$, and/or dolomite with phosphoric acid ($H_3PO_4$) to generate a first reaction product comprising calcium hydrogen phosphate ($CaHPO_4$) and/or magnesium hydrogen phosphate ($MgHPO_4$);

(b) contacting the first reaction product with an ammonia source to generate a second reaction product comprising $CaNH_4PO_4$ and/or $MgNH_4PO_4$;

(c) contacting potassium hydroxide (KOH) with $H_3PO_4$ to generate a third reaction product comprising $K_3PO_4$; and

(d) combining the second reaction product, the third reaction product, and $CaSO_4$ to generate the fertilizer composition.

Aspect 20 is the method of aspect 19, further comprising drying the fertilizer composition to form a solid fertilizer composition.

Aspect 21 is the method of any one of aspects 19 or 20, wherein the combining step (d) comprises combining the third reaction product with $CaSO_4$ at a weight ratio of approximately 3:1 to 1:3.

Aspect 22 is the method of any one of aspects 19 or 21, wherein the combining step (d) comprises combining the third reaction product and $CaSO_4$ with the second reaction product at a weight ratio of approximately 3:1 to 1:5 of a combination of the third reaction product and $CaSO_4$ : second reaction product.

Aspect 23 is the method of any one of aspects 19 to 22, wherein steps (a), (b), and/or (c) occurs at 55 to 75°C.

Aspect 24 is the method of any one of aspects 19 to 23, wherein the $CaSO_4$ comprises red gypsum and/or waste gypsum from production of $H_3PO_4$.

Aspect 25 is the method of any one of aspects 19 to 24, wherein the fertilizer composition comprises $CaSO_4$, $K_3PO_4$,

and one or both of $CaNH_4PO_4$ and $MgNH_4PO_4$.

Aspect 26 is the method of any one of aspects 19 to 25, wherein the ammonia source is ammonium hydroxide ($NH_4OH$) and/or ammonia ($NH_3$).

Aspect 27 is the method of any one of aspects 19 to 26, wherein the fertilizer composition is any one of the fertilizer compositions of aspects 1 to 18.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of' any of the ingredients or steps disclosed throughout the specification. Compositions and methods "consisting essentially of' any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

FIG. 1: Example cross-sectional view of a fertilizer granule according to a non-limiting example of a fertilizer granule described herein.

FIG. 2: a schematic of a system and method for producing a fertilizer according to a non-limiting example of a system and method disclosed herein.

FIG. 3: a schematic of a system and method for producing a fertilizer according to another non-limiting example of a system and method disclosed herein.

## DETAILED DESCRIPTION OF THE INVENTION

Certain aspects of the present disclosure provide benefits over existing fertilizers, including by having both immediate and slow-release characteristics for nutrients comprising the fertilizer. Certain aspects provided herein allow for the fertilizer to immediately release nutrients, such as those comprising phosphate, into the soil for use by plants, while also allowing for the fertilizer to slowly release nutrients, which may also comprise phosphate, into the soil over a period of time, such as throughout a growing cycle for a plant. This dual-release capability can be achieved, in some aspects, without the use of binders, inhibitors, or other interventions that add compounds beyond the fertilizer's nutrients. In some embodiments, the fertilizer comprises a double salt, such as a metal ammonium phosphate, such as calcium ammonium phosphate ($CaNH_4PO_4$), magnesium ammonium phosphate ($MgNH_4PO_4$), or a combination of $CaNH_4PO_4$ and $MgNH_4PO_4$; and an immediate-release agent comprising potassium phosphate ($K_3PO_4$), magnesium sulfate ($MgSO_4$), calcium sulfate ($CaSO_4$), nickel sulfate ($NiSO_4$), zinc sulfate ($ZnSO_4$), iron (II) sulfate ($FeSO_4$), or a combination thereof, which may be one chemical composition and/or one homogenous mixture. The metal ammonium phosphate compound may act as a binder for the other components in the fertilizer

## I. Fertilizer

Certain embodiments herein concern a complex fertilizer comprising a double salt, such as a metal ammonium phosphate, which may comprise $CaNH_4SO_4$ and/or $MgNH_4SO_4$, and a soluble composition, which may comprise $CaSO_4$, $MgSO_4$, and/or $K_3PO_4$. Certain aspects involve synthesis of the nutrient complex using natural sources of ingredients of the fertilizer, such as $CaSO_4$, $CaO$, $MgO$, $CaCO_3$, $MgCO_3$, $H_3PO_4$, $NH_4OH$, and $KOH$. In addition to these feed sources, ammonia also is used, in some embodiments.

The fertilizer, which may be a fertilizer granule, can contain a homogeneous mixture containing calcium (Ca), magnesium (Mg), potassium (K), nitrogen (N) present as ammonium, sulfur (S) present as sulfate. The ratio of elements present in the fertilizer may be tailored to specific applications. At least a portion of Ca can be present as calcium ammonium phosphate and/or calcium sulfate. In some aspects, at least 90 wt. %, or at least 95 wt. %, or 90 wt. % to 100 wt. %, or at least any one of, at most any one of, equal to any one of, or between any two of 90, 91, 92, 93, 94, 95, 96, 97, 98, 99, 99.5, and 100 wt. % of the Ca in the homogeneous mixture can be present as calcium ammonium phosphate and/or calcium sulfate, based on the total weight of Ca in the homogeneous mixture. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Ca in the homogeneous mixture can be present as calcium ammonium phosphate. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the Ca in the homogeneous mixture can be present as calcium sulfate. In some aspects, the homogeneous mixture can contain i) $CaNH_4SO_4$ in an amount providing at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % based on the total weight of the homogeneous mixture and/or the fertilizer granule; ii) $MgNH_4SO_4$ in an amount providing at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % based on the total weight of the homogeneous mixture and/or the fertilizer granule; iii) $K_3PO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the homogeneous mixture and/or the fertilizer granule; iv) $CaSO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the homogeneous mixture and/or the fertilizer granule; and $MgSO_4$ in an amount providing at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, and 99 wt. % based on the total weight of the homogeneous mixture and/or the fertilizer granule.

In some aspects, the homogenous mixture comprises Ca, Mg, N, P, K, and/or S wherein i) the Ca content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the Mg content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the N content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iv) the P content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, v) the K content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the homogeneous mixture and/or fertilizer, and vi) the S content of the homogenous mixture can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the homogeneous mixture and/or fertilizer.

The Ca, Mg, N, P, K, and/or S can be present as and/or sourced as a water soluble compound or a water insoluble compound. In some instances, the Ca, Mg, N, P, K, and/or S can be present as a salt. In some aspects, the Ca, Mg, N, P, K, and/or S can be present as a water soluble salt. In some instances, the water soluble Ca salt can be $CaSO_4$. In some instances, the water soluble P salt can be $K_3PO_4$. In some instances, the water soluble Mg salt can be $MgSO_4$. The Ca, Mg, N, P, K, and/or S salt can be in a non-hydrate and/or one or more hydrate form.

Moisture content of the dried fertilizer can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer granule. As a non-limiting example, the moisture content can be measured by drying the sample at 50°C, for 25 min and measuring the amount of mass lost by the fertilizer after being dried.

In some particular aspects, the $CaSO_4$ can contain and/or can be obtained from phosphogypsum and/or red gypsum.

The fertilizer can be of any suitable shape. Non-limiting shapes include spherical, cuboidal, cylindrical, puck shape, oval, and oblong shapes. In some aspects, the fertilizer granule can be of cylindrical shape with a circular, elliptical, ovular, triangular, square, rectangular, pentagonal, or hexagonal cross section, although cylindrical shaped core having a cross-section of other shapes can also be made. In some aspects, the fertilizer granule at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer granule can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the granule to water at a pH 7, under stirring at a rate 90 rpm to 110 rpm, at an ambient temperature.

The homogeneous mixture can have a compositional make-up that is substantially homogeneous. In some instances, a compositional make-up for a 1 mm × 1 mm × 1 mm cube at any position of the mixture can be similar (within ± 20 %, or ± 10 %, or ± 5 %, or ± 3 %, ± 2 %, or ± 1 %, or ± 0.5 %) to that of a 1 mm × 1 mm × 1 mm cube at any other position of the mixture.

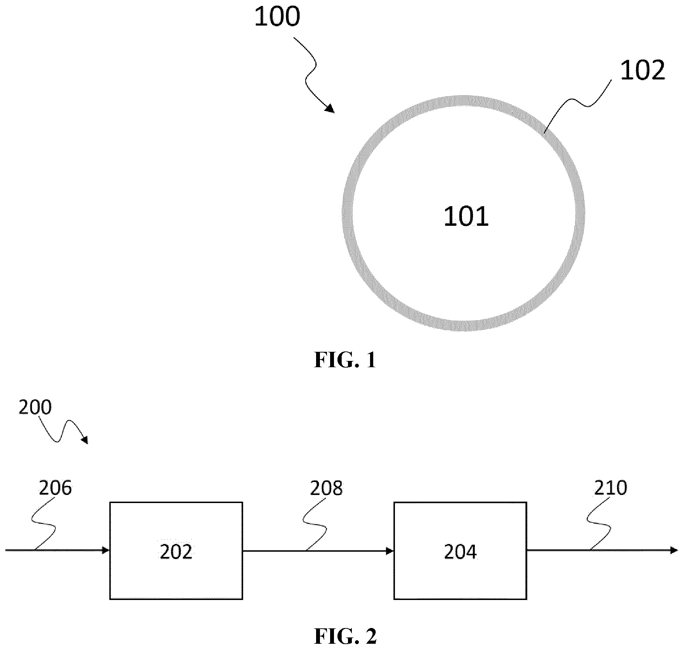

Referring to FIG. 1, a fertilizer granule 100 according to one example of the present invention is shown. The fertilizer granule 100 can contain an homogeneous mixture 101. The homogeneous mixture 101 can have compositions as described above. In some instances, the homogenous mixture 101 can have an optional coating 102 on the outer surface of the homogenous mixture 101. In some instances, the $CaNH_4PO_4$ and/or $MgNH_4PO_4$ can act as a binder in the fertilizer. In some instances the $CaNH_4PO_4$ and/or $MgNH_4PO_4$ is the only binder in the fertilizer. In some instances, the $CaNH_4PO_4$ and/or $MgNH_4PO_4$ form an amorphous phase, a continuous phase, and/or encapsulate other ingredients in the fertilizer. In some instances, the fertilizer comprises a matrix of $CaNH_4PO_4$ and/or $MgNH_4PO_4$ that at least partially surrounds and/or encapsulates at least a portion of the immediate-release agent(s). In some instances, the fertilizer comprises particles of the slow-release agent(s) and/or immediate-release agent(s).

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, additional phosphorus nutrients, additional potassium nutrients, additional micronutrients, and/or additional secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in the optional coating of the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include MgO, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer escribed herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer formed into a granule can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer granule can dissolve in 1 ml of water at a pH 7, under stirring at a rate 90 to 110 rpm, and at an ambient temperature, within 5 minutes of adding 100 mg of the fertilizer granules to the water. In some aspects, the fertilizer granule is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{weight\ of\ sample\ remained\ on\ 2\ mm\ sieve\ ((W2))}{intial\ weight\ of\ the\ sample\ (W1)} \times 100$$

## II. Method of Making a Fertilizer

Referring to FIG. 2, a schematic of a system and method for making a fertilizer according to one example of the present invention is described. The system 200 can include a granulator 202 and a dryer 204. A feed mixture 206 can be granulated in the granulator 202 in the presence of water to form a wet granulated mixture 208. The water can be provided with the feed mixture 206, and/or can be added separately to the granulator 202. The wet granulated mixture 208 can be dried in the dryer 204 to obtain dry granulated mixture 210 containing the fertilizer.

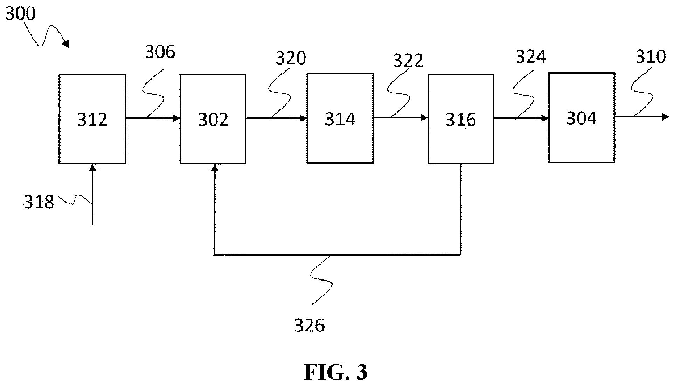

Referring to FIG. 3, a schematic of a system and method for making a fertilizer according to another example of the present invention is described. The system 300 can include a mixer/reactor 312, though the mixer and the reactor can be two, three, four, or more components, such as two reactors and a mixer or a reactor and a mixer. The system 300 can include a granulator 302, a spheronizer 314, one or more size screens 316, and a dryer 304, or any combination thereof. The feed mixture ingredients 318, separately and/or at any possible combination can be added to the mixer/reactor 312. In the mixer/reactor 312, the feed ingredients can be reacted and/or mixed to form the feed mixture 306. Feed mixture 306 can be granulated in the granulator 302 in presence or absence of additional water to form a wet granulated mixture 320. Granules of the wet granulated mixture 320 can be spheronized in the spheronizer 314 to form a wet granulated mixture 322 containing substantially spherical granules. The wet granulated mixture 322 can be passed through one or more size screens 316 to separate granules having a size smaller or bigger than a desired size from the wet granulated mixture 322 and obtain a wet granulated mixture 324 containing granules of desired size. At least a portion of the granules separated 326 from the granulation mixture 324 containing granules of desired size can be recycled to the granulator 302. The wet granulated mixture 324 containing granules of desired size can be dried in the dryer 304 to obtain dry granulated mixture 310 containing the fertilizer granule. In some aspects, the mixer/reactor 312 can contain a ribbon mixer.

The feed mixture ingredients 318 can include i) a Ca source, e.g., calcium oxide and/or calcium carbonate, ii) a Mg source, e.g., magnesium oxide and/or magnesium carbonate, iii) a N source, e.g., $NH_4^+$ and/or $NH_3$ iv) a P source, e.g., phosphoric acid, and iv) a K source, e.g., KOH. In some instances, a mixture ingredient provides more than one of Ca, Mg, N, P, K, and/or S substance. In certain aspects, one or more ingredients can be added as a water solution. In some instances, the mixture ingredients are provided as a powder. In some instances, one or more ingredients can be added as a gas. In some instances, the $NH_3$ is provided at a pressure above 1 bar, such as at, or between, or of any range of 1.2, 1.3, 1.4, 1.5, 2, 2.5, 3, 3.5, 4, 4.5, 5, 5.5., 6, 6.5, 7, 7.5, 8, 9, 10, 15, 20, 25, 30, 35, and 40 bar. In some instances, a portion of the mixture ingredients are provided as a powder.

The feed mixture 206, 306 can contain Ca, Mg, N, P, K, and/or S. In some aspects, the feed mixture 206, 306 can contain i) a metal oxide and/or metal carbonate, ii) phosphoric acid, iii) ammonium hydroxide, and/or iv) potassium hydroxide.

Water can be added to the feed mixture in the mixer/reactor 312 and/or in the granulator 202, 302. In certain aspects, 5 gm to 20 gm, or at least any one of, at most any one of, equal to any one of, or between any two 5, 6, 7, 8, 9, 10, 11, 12, 13, 14, 15, 16, 17, 18, 19, and 20 gm of water in total (e.g., added with one or more feed mixture ingredients and/or separately) can be added to the feed mixture, per 100 gm of feed mixture.

In some aspects, the granulator 202, 302 can be a drum granulator, pugmill granulator, pan granulator, solid mixer, abrasion drum, extruder, high-shear mixer granulator, roller granulator, mycromix, or a round bottom flask. In the granulator 202, 302 the feed mixture 206, 306 can be granulated by agglomeration, spray granulation, compaction, slurry granulation and/or high-shear mixer granulation. In some particular aspect, the feed mixture 206, 306 can be granulated in the granulator 202, 302 by compaction. In some aspects, the granulator 202, 302 can contain at least two rollers and compaction granulation can include compressing the feed mixture using the at least two rollers. In some aspects, the two rollers can be moved in counter current direction during compaction. In some aspects, the feed mixture can be compressed into shaped pellets, such as cylindrical pellets, by the at least two rollers. In some aspects, a surface of one roller can have desired holes to compress the feed mixture into the holes, and the surface of the other roller can push the feed mixture into the holes. Pressure during granulation, e.g. compaction granulation can be 1 bar to 40 bar, or at least any one of, at most any one of, equal to any one of, or between any two 1, 2, 3, 4, 5, 10, 15, 20, 25, 30, 35, and 40 bar. In certain aspects, the feed mixture can be granulated in the granulator 202, 302 at ambient temperature to 50 °C, or at least any one of, at most any one of, equal to any one of, or between any two of -20, -15, -10, 0, 5, 10, 15, 20, 25, 30, 35, 40, 45 and 50 °C.

In some aspects, reacting of the feed mixture ingredients, mixing, and granulating the feed mixture can be performed in different containers, e.g., the mixer/reactor 312 and the granulator 302 can be different containers. In some aspects, reacting of the feed mixture ingredients, mixing, and granulating the feed mixture can be performed in the same container, e.g., the mixer/reactor 312 and the granulator 302 can be the same container (not shown).

In some aspects, the calcium hydrogen phosphate ($CaHPO_4$), magnesium hydrogen phosphate ($MgHPO_4$), $CaNH_4PO_4$, $MgNH_4PO_4$, and/or $K_3PO_4$ are formed at a temperature of at least, at most, equal to, or between any two of 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 °C, such as between 20 and 75 °C, or between 30 and 75 °C, or between 55 to 75 °C.

In some instances, the fertilizer can be extruded before drying. The extruder can extrude the fertilizer at pressures at least, at most, equal to, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 bar. The extruder can extrude the fertilizer at temperatures at least, at most, equal to, or between any two of -20, -15, -10, 0, 5, 10, 15, 20, 25, 30, 35, 40, 45 and 50 °C. The extrudate can be sliced or divided before drying, such as by a die.

In certain aspect, the desired size of a final fertilizer product, such as a granule, can be 0.5 to 5 mm, or 1 to 4 mm, and having a size lower than 0.5 mm or 1 mm, and/or having a size bigger than 4 mm or 5 mm can be separated from the wet granulated mixture 322 in the one or more size screens 316. In certain aspects, the wet granulated mixture can be rounded and/or spheronized in a spheronizer. In some instances, the wet granulated mixture is contacted with a spheronizer for at least any one of, at most any one of, equal to any one of, or between any two of 5, 10, 15, 20, 25, 30, 35, 40, 50, or 60 seconds. The spheronizer in some instances has a rotating or rotatable disk capable of rotating at least any one of, at most any one of, equal to any one of, or between any two of 200, 500, 1000, 1500, 2000, 2500, 3000, 3500, 4000, 4500, 5000 rpm. In certain aspects, the wet granulated mixture can be dried in the dryer 204, 304 at a temperature 40 °C to 85 °C, or at least any one of, at most any one of, equal to any one of, or between any two of 40, 45, 50, 55, 60, 65, 70, 75, 80 and 85 °C. In some aspects, the dryer 204, 304 can be a fluid bed dryer, drum dryer, or flash dryer. In some aspects, the wet granulated mixture can be dried in the dryer 204, 304 with an hot air flow having a flow rate of at least any one of, at most any one of, equal to any one of, or between any two of 100, 150, 200, 250, 300, 350, 400, 450, and 500 $m^3$/hr and/or a rotation of at least any one of, at most any one of, equal to any one of, or between any two of 5, 10, 15, 20, 25, 30, 35, 40, 45, and 50 rpm.

### III. Methods of Using the Fertilizer

The fertilizer, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

The effectiveness of compositions comprising the fertilizer of the present invention can be ascertained by measuring the amount of phosphorus and optionally other nutrients in the soil at various times after applying the fertilizer composition to the soil. It is understood that different soils have different characteristics, which can affect the stability of the nutrients in the soil. The effectiveness of a fertilizer composition can also be directly compared to other fertilizer compositions by doing a side-by-side comparison in the same soil under the same conditions.

## Examples

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

**Production of a slow-release and immediate-release fertilizer composition**

A stoichiometric reaction of CaO and $H_3PO_4$ at 65°C can produce $CaHPO_4$ according to reaction (1):

$$(1) \qquad CaO + H_3PO_4 \rightarrow CaHPO_4 + H_2O$$

A stoichiometric amount of $NH_4OH$ and/or $NH_3$ can react with the intermediate product $CaHPO_4$ to produce $CaNH_4PO_4$ according to reaction (2):

$$(2) \qquad CaHPO_4 + NH_4OH \rightarrow CaNH_4PO_4$$

A stoichiometric amount of KOH and $H_3PO_4$ can react at 65°C to produce $K_3PO_4$ according to reaction (3):

$$(3) \qquad 3KOH + H_3PO_4 \rightarrow K_3PO_4 + 3H_2O$$

$CaSO_4$, selected from any resource, can be mixed with the product of reaction (3) at a ratio of 3:1 to generate a $CaSO_4$ and $K_3PO_4$ mixture. The $CaSO_4$ and $K_3PO_4$ mixture can be mixed with the product of the reaction (1) or the products of reaction (2) at a ratio of 1:2. The mixture can be dried slowly at 40°C, then the dried material can be pelleted to a particle size of 3x4 mm.

A stoichiometric reaction of MgO and $H_3PO_4$ at 65°C can produces $MgHPO_4$ according to reaction (4):

$$(4) \qquad MgO + H_3PO_4 \rightarrow MgHPO_4 + H_2O$$

A stoichiometric amount of $NH_4OH$ and/or $NH_3$ can react with the intermediate product $MgHPO_4$ to produce $MgNH_4PO_4$ according to reaction (5):

$$(5) \qquad MgHPO_4 + NH_4OH \rightarrow MgNH_4PO_4$$

The $CaSO_4$ and $K_3PO_4$ mixture can be mixed with the product of the reaction (4) or the products of reaction (5) at a ratio of 1:2. The mixture can be dried slowly at 40°C, then the dried material can be pelleted to a particle size of 3x4 mm.

A fertilizer comprising both calcium ammonium phosphate and magnesium ammonium phosphate can also be prepared by combining the steps above. The ratio of calcium sulfate and $K_3PO_4$ to total $CaNH_4PO_4 + MgNH_4PO_4$ can be 1:2 or can be 1 $K_3PO_4$ to 2 $CaNH_4PO_4$ and 1 $K_3PO_4$ to 2 $MgNH_4PO_4$.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1. A fertilizer composition comprising:

   a slow-release agent comprising calcium ammonium phosphate ($CaNH_4PO_4$), magnesium ammonium phosphate ($MgNH_4PO_4$), or a combination of $CaNH_4PO_4$ and $MgNH_4PO_4$:
   an immediate-release agent comprising calcium sulfate ($CaSO_4$), potassium phosphate ($K_3PO_4$), and/or magnesium sulfate ($MgSO_4$).

2. The fertilizer composition of claim 1, wherein the composition comprises a further slow-release agent comprising magnesium oxide (MgO), calcium oxide (CaO), zinc oxide (ZnO), nickel oxide (NiO), magnesium carbonate ($MgCO_3$), calcium carbonate, ($CaCO_3$), iron (II) carbonate ($FeCO_3$), or a combination thereof.

3. The fertilizer composition of any one of claims 1 to 2, wherein the immediate-release agent further comprises nickel sulfate ($NiSO_4$), zinc sulfate ($ZnSO_4$), iron (II) sulfate ($FeSO_4$), or a combination thereof.

4. The fertilizer composition of any one of claims 1 to 3, wherein the immediate-release agent comprises $CaSO_4$, and the $CaSO_4$ is comprised in waste gypsum and/or a recycled gypsum.

5. The fertilizer composition of any one of claims 1 to 4, wherein the fertilizer does not comprise a binding agent separate from the $CaNH_4PO_4$, $MgNH_4PO_4$, or combination of $CaNH_4PO_4$ and $MgNH_4PO_4$.

6. The fertilizer composition of any one of claims 1 to 5, wherein the fertilizer composition is a granular fertilizer and/or the fertilizer is homogenous.

7. The fertilizer composition of any one of claims 1 to 6, further comprising iron (II) phosphate ($FePO_4$), KOH, $K_2CO_3$, $KHCO_3$, and/or dolomite.

8. The fertilizer composition of any one of claims 1 to 7, wherein the immediate-release agent and the slow-release agent are comprised at a weight ratio between approximately 3:1 to 1:5.

9. The fertilizer composition of any one of claims 1 to 8, wherein the immediate-release agent comprises $K_3PO_4$, preferably $CaSO_4$ and $K_3PO_4$, preferably wherein the $CaSO_4$ and $K_3PO_4$ are comprised at a weight ratio of approximately 3:1 to 1:3.

10. The fertilizer composition of any one of claims 1 to 9, wherein the slow-release agent comprises a combination of $CaNH_4PO_4$ and $MgNH_4PO_4$.

11. The fertilizer composition of any one of claims 1 to 10, wherein the fertilizer composition comprises a nitrogen source, a phosphorus source, and a potassium source.

12. A method of producing a fertilizer composition, the method comprising the steps of:

    (a) contacting CaO, MgO, $MgCO_3$, $CaCO_3$, and/or dolomite with phosphoric acid ($H_3PO_4$) to generate a first reaction product comprising calcium hydrogen phosphate ($CaHPO_4$) and/or magnesium hydrogen phosphate ($MgHPO_4$);
    (b) contacting the first reaction product with an ammonia source to generate a second reaction product comprising $CaNH_4PO_4$ and/or $MgNH_4PO_4$;
    (c) contacting potassium hydroxide (KOH) with $H_3PO_4$ to generate a third reaction product comprising $K_3PO_4$; and
    (d) combining the second reaction product, the third reaction product, and $CaSO_4$ to generate the fertilizer composition, preferably wherein the $CaSO_4$ is red gypsum, phosphogypsum, and/or waste gypsum from production of $H_3PO_4$, and preferably wherein the fertilizer composition comprises $CaSO_4$, $K_3PO_4$, and one or both of $CaNH_4PO_4$ and $MgNH_4PO_4$.

13. The method of claim 12, further comprising drying the fertilizer composition to form a solid fertilizer composition.

14. The method of any one of claims 12 or 13, wherein the combining step (d) comprises combining the third reaction

product with $CaSO_4$ at a weight ratio of approximately 3:1 to 1:3, and/or comprises combining the third reaction product and $CaSO_4$ with the second reaction product at a weight ratio of approximately 3:1 to 1:5 of a combination of the third reaction product and $CaSO_4$ : second reaction product.

15. The method of any one of claims 12 to 14, wherein steps (a), (b), and/or (c) occurs at 55 to 75°C.

100

102

101

**FIG. 1**

200

206

208

210

202

204

**FIG. 2**

**FIG. 3**

Europäisches
Patentamt

European
Patent Office

Office européen
des brevets

# EUROPEAN SEARCH REPORT

Application Number

EP 22 18 8756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 77314 98 A (HI FERT PTY LTD) 28 January 1999 (1999-01-28) * page 13, line 14 - line 30; claims; tables II,VI * | 1-7,9-11 | INV. C05B1/00 C05B7/00 C05B9/00 C05G3/40 |
| X | WO 2010/135814 A1 (GOODWIN MARK [CA]; WOLF TRAX INC [CA]) 2 December 2010 (2010-12-02) * claims * | 1,6,8 | C05G5/12 C05G5/14 |
| A | WO 2014/198000 A1 (OSTARA NUTRIENT RECOVERY TECHNOLOGIES INC [CA]) 18 December 2014 (2014-12-18) * paragraphs [0009], [0018]; claims * | 1-15 | |
| A | WO 2021/163809 A1 (OSTARA NUTRIENT RECOVERY TECH INC [CA]) 26 August 2021 (2021-08-26) * paragraphs [0003], [0004], [0008]; claims; example 7 * | 1-15 | |

| TECHNICAL FIELDS SEARCHED (IPC) |
|---|
| C05B C05D C05G |

The present search report has been drawn up for all claims

| Place of search | Date of completion of the search | Examiner |
|---|---|---|
| The Hague | 17 January 2023 | Grittern, Albert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 8756

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | Publication date | Patent family member(s) | Publication date |
|---|---|---|---|
| AU 7731498 A | 28-01-1999 | NONE | |
| WO 2010135814 A1 | 02-12-2010 | AU 2010251842 A1 | 08-12-2011 |
| | | CA 2770003 A1 | 02-12-2010 |
| | | DK 2435385 T3 | 03-12-2018 |
| | | EP 2435385 A1 | 04-04-2012 |
| | | ES 2695036 T3 | 28-12-2018 |
| | | NZ 596533 A | 20-12-2013 |
| | | US 2012073341 A1 | 29-03-2012 |
| | | WO 2010135814 A1 | 02-12-2010 |
| WO 2014198000 A1 | 18-12-2014 | CA 2914452 A1 | 18-12-2014 |
| | | CN 105452197 A | 30-03-2016 |
| | | DK 3008034 T3 | 08-06-2020 |
| | | EP 3008034 A1 | 20-04-2016 |
| | | EP 3666747 A1 | 17-06-2020 |
| | | ES 2796074 T3 | 25-11-2020 |
| | | HU E049439 T2 | 28-09-2020 |
| | | LT 3008034 T | 25-06-2020 |
| | | PL 3008034 T3 | 02-11-2020 |
| | | PT 3008034 T | 17-06-2020 |
| | | US 2016130191 A1 | 12-05-2016 |
| | | US 2018319715 A1 | 08-11-2018 |
| | | WO 2014198000 A1 | 18-12-2014 |
| WO 2021163809 A1 | 26-08-2021 | AU 2021223668 A1 | 07-07-2022 |
| | | BR 112022015252 A2 | 20-09-2022 |
| | | CA 3170861 A1 | 26-08-2021 |
| | | CN 115038679 A | 09-09-2022 |
| | | EP 4107137 A1 | 28-12-2022 |
| | | WO 2021163809 A1 | 26-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIMÉNEZ-RIVEROJUSTO GARCIA-NAVARRO.** *Advances in Construction and Demolition Waste Recycling,* 2020